(19) Europäisches Patentamt
European Patent Office
Office européen des brevets

(11) Numéro de publication: **0 263 749 B1**

(12) **FASCICULE DE BREVET EUROPEEN**

(45) Date de publication de fascicule du brevet: **29.05.91**

(51) Int. Cl.5: **C09D 4/02**, C08F 220/00

(21) Numéro de dépôt: **87402189.2**

(22) Date de dépôt: **02.10.87**

# (54) Procédé de fabrication de revêtements par radioréticulation.

(30) Priorité: **02.10.86 FR 8613726**

(43) Date de publication de la demande: **13.04.88 Bulletin 88/15**

(45) Mention de la délivrance du brevet: **29.05.91 Bulletin 91/22**

(84) Etats contractants désignés: **AT BE CH DE ES FR GB GR IT LI LU NL SE**

(56) Documents cités: **EP-A- 0 168 226**

(73) Titulaire: **SOCIETE NATIONALE DES POUDRES ET EXPLOSIFS**
**12, quai Henri IV**
**F-75181 Paris Cédex 04(FR)**

(72) Inventeur: **Chevallier, Francois**
**26 allée A. Leveque**
**F-24108 Bergerac(FR)**
Inventeur: **Chevalier, Sammy**
**143 boulevard Lefebvre**
**F-75015 Paris(FR)**

(74) Mandataire: **Pech, Bernard et al**
**SNPE - Service Propriété Industrielle 12, Quai Henri IV**
**F-75181 Paris Cédex 04(FR)**

EP 0 263 749 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention a pour objet un procédé de fabrication de revêtements par radioréticulation de compositions contenant une résine durcissable par polymérisation de doubles liaisons

$$>C = CH_2$$

et un système diluant réactif. Elle a également pour objet l'acrylate de bêta hydroxyéthylcarbamate d'isopropyle, composé nouveau qui peut notamment être utilisé pour fabriquer des revêtements par radioréticulation.

On entend par "revêtement" un film polymérisé revêtant un support tel que le bois, le papier, un métal, une matière plastique ou minérale.

On entend par "résine durcissable par polymérisation de doubles liaisons

$$>C = CH_2"$$

un oligomère ou un mélange d'oligomères présentant de manière générale au moins un groupe

$$>C = CH_2$$

terminal, ou pendant, et qui réticule par l'intermédiaire de ces groupes par des moyens appropriés de radioréticulation, notamment de photoréticulation.

Les compositions utilisées pour obtenir des revêtements associent une telle résine durcissable à un système diluant réactif qui permet dans un premier temps de réduire la viscosité de la composition, la résine précitée étant trop visqueuse pour être correctement appliquée en film sur le support. Dans un second temps, le système diluant réactif participe à la polymérisation de la résine (copolymérisation) ce qui permet d'obtenir les propriétés mécaniques désirées.

Ces systèmes diluants réactifs, miscibles avec la résine, contiennent au moins un diluant comportant une ou plusieurs insaturations qui réagissent avec les doubles liaisons de la résine.

Le choix du diluant réactif conditionne les propriétés physiques et mécaniques du revêtement. Ce diluant doit pour des raisons évidentes être peu volatil et non toxique. Sa réactivité avec la résine doit être élevée, notamment pour des raisons qui seront précisées ultérieurement.

De très nombreux systèmes diluants réactifs ont déjà été décrits dans la littérature. les diluants réactifs peuvent être classés en deux groupes : les monomères vinyliques et les monomères acryliques.

L'intérêt des monomères vinyliques comme la N-vinyl pyrrolidone est qu'ils permettent d'obtenir des mélanges très réactifs. Cependant ils sont volatils et très souvent toxiques. De plus, avec la N-vinyl pyrrolidone qui est le monomère vinylique le plus utilisé, on obtient des revêtements assez hygroscopiques, ce qui modifie leurs propriétés mécaniques.

Les monomères acryliques ne présentent pas cet inconvénient mais ils conduisent à des mélanges moins réactifs qu'avec la N-vinyl pyrrolidone.

EP 147172 décrit par exemple une composition pour fabriquer des revêtements par radioréticulation, contenant comme diluant réactif un carbamoyloxy alkylacrylate répondant à la formule générale

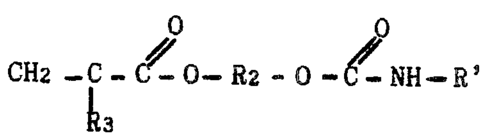

On utilise également très fréquemment des monoacrylates comme l'E.D.G.A. de formule

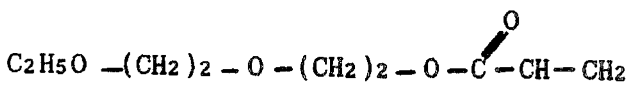

ou, pour augmenter la réactivité, des acrylates multifonctionnels, comme le diacrylate d'hexanededioI (HDDA) ou le triacrylate de triméthylol propane (TMPTA).

Par ailleurs EP-A-0168226 décrit des compositions réticulables aux UV pour l'obtention de produits résistant à l'abrasion. Ces compositions contiennent un modificateur de retrait de polymerisation qui permet de supprimer les contraintes internes créées dans le polymère par le retrait. Ce modificateur peut être un ester carbamique polyacrylique de formule

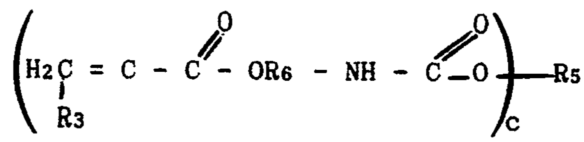

dans laquelle c est un nombre entier compris entre 2 et 15, $R_3$ est H ou $CH_3$, $R_6$ est un groupe alkylène en $C_1$ - $C_8$ et $R_5$ est une structure linéaire polyvalente. Ces compositions contiennent également comme diluants réactifs des monomères acryliques tels que l'acide acrylique, le TMPTA, le 2-phénoxyéthylacrylate et le 2-carbamoyloxyéthylacrylate ou vinyliques tels que le styrène, le chlorure de vinyle et l'acétate de vinyle.

Dans le domaine des procédés de fabrication de revêtements par radioréticulation l'homme de métier recherche des diluants réactifs permettant d'une part d'améliorer les propriétés d'usage telles que souplesse, adhésion, résistance à l'abrasion et d'autre part d'augmenter la réactivité du système résine-diluant.

La demanderesse a découvert que, de façon inattendue, les acrylates d'hydroxyalkylcarbamate répondant à la formule générale (I)

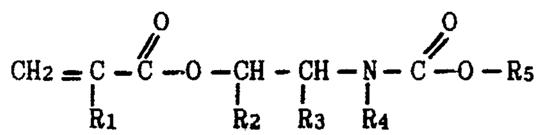

dans laquelle

- . $R_1$ représente un atome d'hydrogène ou un groupement méthyle
- . $R_2$ et $R_3$ représentent un atome d'hydrogène, ou une chaîne alkyle comportant de 1 à 4 atomes de carbone,
- . $R_4$ représente un atome d'hydrogène, ou une chaine alkyle comportant de 1 à 4 atomes de carbone,
- . $R_5$ représente une chaîne aliphatique éventuellement substituée comportant de 1 à 10 atomes de carbone,
- . ou bien encore $R_4$ et $R_5$ forment, avec le groupement carbamate auquel ils sont attachés, un cycle à 5 ou 6 chaînons

peuvent être utilisés comme diluants réactifs dans les compositions pour fabriquer des revêtements par radioréticulation et que, comparativement aux esters acryliques homologues ou aux carbamoyl oxyalkylacrylates correspondants décrits dans EP 147172, ils permettent d'une part un gain très important en réactivité et d'autre part un meilleur compromis souplesse/dureté du revêtement obtenu, à savoir un gain de souplesse à dureté de surface équivalente ou une meilleure dureté à souplesse équivalente. Le gain en réactivité entraîne soit un gain du temps d'exposition aux radiations pour obtenir la réticulation, ce qui est très appréciable, soit, à temps d'exposition égal, un gain en amorçeur, ce qui permet dans le cas d'utilisation de systèmes tels que benzophénone/amine tertiaire ou thioxantone/amine tertiaire, de réduire considérablement le taux d'amine nécessaire. Or il est bien connu que la présence d'une amine, outre le fait que son odeur est désagréable, entraîne un jaunissement et une diminution importante de la dureté du revêtement.

Le procédé, selon l'invention, de fabrication de revêtements par radioréticulation de compositions contenant une résine durcissable par polymérisation de doubles liaisons

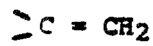

et un système diluant réactif est caractérisé en ce que ledit système contient au moins un diluant réactif répondant à la formule générale (I)

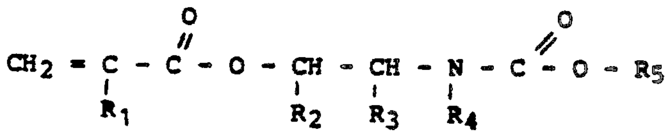

dans laquelle

. $R_1$ représente un atome d'hydrogène ou un groupement méthyle

. $R_2$ et $R_3$ représentent un atome d'hydrogène, ou une chaîne alkyle comportant de 1 à 4 atomes de carbone,

. $R_4$ représente un atome d'hydrogène, ou une chaîne alkyle comportant de 1 à 4 atomes de carbone,

. $R_5$ représente une chaîne aliphatique éventuellement substituée comportant de 1 à 10 atomes de carbone,

. ou bien encore $R_4$ et $R_5$ forment, avec le groupement carbamate auquel ils sont attachés, un cycle à 5 ou 6 chaînons,

Selon une variante de l'invention, lorsque $R_5$ représente une chaîne aliphatique, celle-ci contient au moins un groupement acrylique ou méthacrylique.

Selon une variante préférée, $R_2$ et $R_3$ représentent un atome d'hydrogène.

Selon d'autres variantes préférées, $R_4$ représente un atome d'hydrogène, ou bien $R_4$ forme avec $R_5$ et le groupement carbamate un cycle oxazolidone,

De façon particulièrement préférée le diluant réactif est l'acrylate de bêta hydroxy éthyl oxazolidone de formule

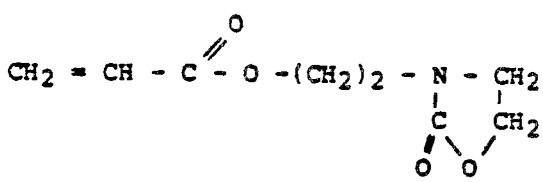 ou

l'acrylate de bêtahydroxyéthylcarbamate d'isopropyle de formule

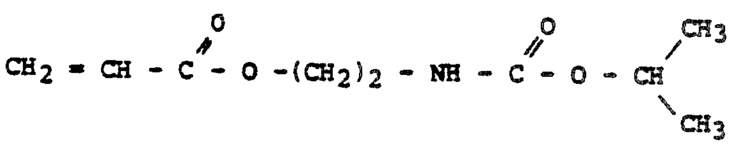

Ce dernier composé est nouveau alors que par exemple GB 980393 décrit, entre autres, l'utilisation de l'acrylate de bêta hydroxyéthyl oxazolidone dans des huiles lubrifiantes et FR 1.090.805 celle du méthacrylate de bêta hydroxyéthyl carbamate d'éthyle comme intermédiaire de synthèse d'isocyanate esters polymérisables.

Les diluants réactifs répondant à la formule générale (I) précitée utilisables pour mettre en oeuvre le procédé selon l'invention de fabrication de revêtements par radioréticulation peuvent être par exemple synthétisés selon les méthodes décrites dans FR 1.090.805 et GB 980393. L'exemple 1 décrit ci-après illustre une telle synthèse.

Pour mettre en oeuvre le procédé selon l'invention, on opère selon le processus opérationnel classique d'obtention de revêtements par radioréticulation de compositions contenant une résine durcissable par polymérisation de doubles liaisons

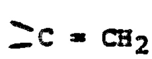

et un système diluant réactif.

Les proportions des constituants des compositions peuvent varier en fonction des propriétés mécaniques recherchées pour le revêtement.

Selon une variante de l'invention, on utilise un diluant réactif répondant à la formule générale (I) précitée à titre de seul diluant réactif.

Selon d'autres variantes, on peut l'utiliser en mélange avec au moins un autre diluant réactif, par exemple avec un diluant réactif acrylique, ou encore en mélange avec un diluant non réactif.

On peut encore utiliser un mélange de diluants réactifs répondant à la formule générale (I).

Pour 100 parties en poids de composition, la proportion des différents constituants est en général comprise dans les limites suivantes :

Résine : 30 à 80 %

Système diluant réactif : 70 à 20 %

Les résines durcissables par polymérisation de doubles liaisons-

$$>C=CH_2$$

utilisables pour mettre en oeuvre le procédé selon l'invention peuvent posséder une ou plusieurs insaturations, de préférence 0,2 à 5 équivalents d'insaturations par kg de résine. Plus précisemment, les résines qui conviennent pour l'invention comprennent les résines polyester-acryliques, les résines polyéther-acryliques et les résines polycarbonate-acryliques qui sont obtenues par réaction de l'acide acrylique ou méthacrylique sur un polyol, les résines uréthanne insaturées résultant de la réaction d'un polyol avec un ester insaturé ayant un hydrogène actif par l'intermédiaire d'un polyisocyanate aliphatique ou aromatique et les résines époxy-acryliques qui peuvent être obtenues par réaction de l'acide acrylique ou méthacrylique avec des composés époxydes.

A titre d'exemple d'ester insaturé ayant un hydrogène actif, on peut citer les hydroxyalkylacrylates ou méthacrylates et, notamment, l'hydroxy-2 éthyl acrylate ou méthacrylate et l'hydroxy-2 propylacrylate ou méthacrylate.

Parmi les polyisocyanates convenables, on peut citer, à titre indicatif, les composés suivants: les 2,4 et 2,6-diisocyanato-toluène, les 2,4 et 2,6 diisocyanato-méthyl-1 cyclohexane, le 4,4'-diisocyanato-dicyclohexyl méthane, le diisocyanato-isophorone, le diisocyanate d'hexaméthylène, le diisocyanato-2,2,4-triméthylhexaméthylène, les biurets à base, par exemple, de diisocyanate d'hexaméthylène, ainsi que leur mélange.

Parmi les polyols qui conviennent pour la présente invention on peut citer :

- les polyépichlorhydrines hydroxylées,
- les polybutadiènes hydroxylés,
- les polycarbonates hydroxytéléchéliques obtenus par phosgénation ou transestérification de diols ou triols aliphatiques, cycloaliphatiques ou aromatiques seuls ou en mélange
- les polycaprolactones,
- les polyesters hydroxytéléchéliques obtenus par réaction d'un polyol (tel qu'éthylèneglycol, diéthylèneglycol, glycérol, butane diol-1,3, bisphénol A propoxylé, sorbitol, etc...) sur un acide polycarboxylique ou son anhydride ou son ester (tel que l'acide adipique, l' anhydride maléique, succinique ou téréphtalique)
- les polyétherpolyols obtenus par addition d'un oxyde d'alkylène (tel que l'oxyde d'éthylène, l'oxyde de propylène, le tétrahydrofuranne) sur un polyol tel qu'indiqué ci-dessus,
- les polyéthers esters tels que l'adipate de polydiéthylèneglycol et l'adipate de polytriéthylèneglycol dans lesquels le polyéther remplace une partie du glycol
- les polyuréthannes hydroxytéléchéliques formés à partir de polyols tels que précités et de polyisocyanates tels que ceux précités.

Parmi les composés époxydes convenables on peut citer par exemple le diglycidyle éther du bisphénol A (DGEBA).

Pour des raisons de mise en oeuvre, il est préférable de choisir des résines linéaires. Il est également préférable que ces résines aient une masse moléculaire comprise entre 600 et 10 000.

Pour mettre en oeuvre le procédé selon l'invention, on radioréticule la composition contenant la résine et le système diluant réactif après avoir appliqué celle-ci sur le support à revêtir sous forme d'un film de faible épaisseur, selon un moyen connu en soi. De préférence l'épaisseur est inférieure à 0,2 mm.

Comme rayonnement on peut employer, par exemple, un rayonnement électromagnétique, un bombardement électronique ou un rayonnement nucléaire.

De façon préférée, on utilise un rayonnement UV, en présence d'un photo-initiateur.

A titre d'exemples non limitatifs, on peut citer comme photo-initiateurs les éthers de la benzoïne et les dérivés phénoniques tels que benzophénone ou diéthoxyacétophénone, seuls (par exemple le photo-initiateur commercialisé par la Société CIBA sous la marque déposée "IRGACURE 651" ou le photo-initiateur commercialisé par la Société MERCK sous la marque déposée "DAROCUR 1116") ou en association avec une amine tertiaire, par exemple la méthyldiéthanolamine.

Un mode préféré de réalisation de l'invention consiste à faire passer le support revêtu de la composition sous une lampe UV, à vitesse désirée.

La composition utilisée pour mettre en oeuvre le procédé selon l'invention peut contenir tous les additifs habituellement utilisés dans les compositions radioréticulables pour revêtements, notamment des agents pour ajuster le brillant de surface du revêtement, des tensioactifs, des charges ou des colorants.

Les exemples ci-après illustrent l'invention, sans pour autant la limiter.

Exemple 1 : Synthèse de l'acrylate de bêtahydroxyéthylcarbamate d'isopropyle.

Cette synthèse est réalisée en 2 étapes :

Etape 1 :

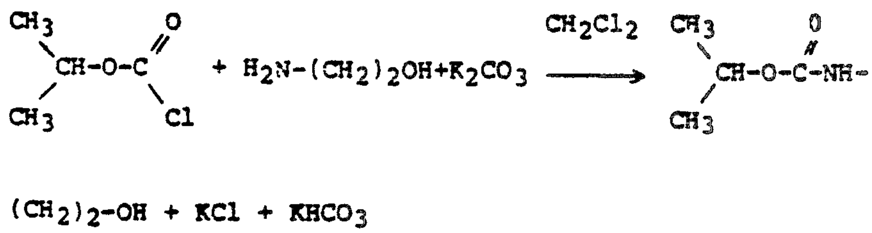


Etape 2 :

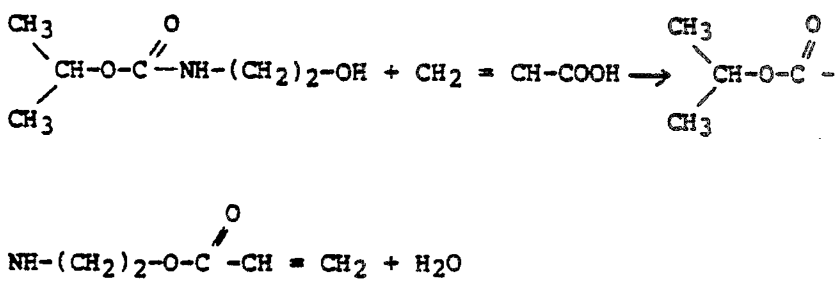

Etape 1 :

Dans un réacteur de 50 l comportant une double enveloppe dans laquelle circule du glycol à - 10 ° C on mélange :

- 25 l de chlorure de méthylène
- 6900 g (50 moles) de carbonate de potassium
- 5 l d'eau
- 3202 g (52,5 moles) d'éthanolamine.

La température du mélange est de l'ordre de 0 ° C. On additionne alors progressivement 6125 g (50 moles) de chloroformiate d'isopropyle.

Après filtration et décantation des phases on récupère la phase organique que l'on neutralise avec de l'eau pour la débarasser des traces de sels de potassium formés. Après évaporation du chlorure de méthylène, on obtient 6300 g de bêta hydroxyéthylcarbamate d'isopropyle, ce qui correspond à un rendement de 86 %. Le produit a été identifié par spectométries IR et RMN et sa pureté (97 %) a été mesurée par méthode chimique (taux d'hydroxyle, taux d'azote).

Etape 2 :

Dans un réacteur de 20 l comportant une double enveloppe avec circulation d'huile, on mélange, à température ambiante et sous agitation :

- 3381 g (23 moles) de bêtahydroxyéthylcarbamate d'isopropyle
- 1740 g (24,15 moles) d'acide acrylique
- 4 l de toluène
- 2,3 g de paraméthoxyphénol.

On porte la température à 75° C par circulation d'huile chaude dans la double enveloppe du réacteur. On ajoute alors 360 g (3,68 moles) d'acide sulfurique à 98 %. On fait un vide partiel dans le réacteur de façon à récupérer azeotropiquement l'eau formée lors de la réaction d'estérification.

Après environ 4 h de réaction, on ajoute 450 g (4,6 moles) de carbonate de sodium pour débarasser le milieu de toute acidité résiduelle.

On lave alors le milieu réactionnel afin de solubiliser les sels formés lors de la réaction avec le carbonate de sodium.

On évapore sous pression réduite le toluène et les produits volatils. On obtient ainsi 3136 g d'acrylate de bêtahydroxyéthylcarbamate d'isopropyle, identifié par spectométries IR et RMN, ce qui correspond à un rendement de 68 % par rapport au bêtehydroxyéthylcarbamate d'isopropyle.

La pureté du produit, supérieure à 90 %, a été déterminée par potentiométrie et analyse élémentaire.

C'est un liquide clair, dont les caractéristiques physiques sont les suivantes :

- densité : 1,11
- indice de réfraction à 25° C : 1,455
- point d'ébullition : 115° C sous 2 mmHg
- viscosité à 25° C : 70 mPa.s.

Exemples 2 à 20 :

Réalisation de revêtements avec des compositions contenant l'acrylate de bêtahydroxyéthylcarbamate d'isopropyle comme diluant réactif. Comparaisons avec des revêtements obtenus selon des procédés connus.

A/ Exemples 2 à 7 - Comparaison de la réactivité

Les essais sont effectués à l'aide de la résine uréthanne diacrylique commercialisée par la SNPE sous la marque déposée "ACTILANE 20" (Act. 20) de masse moléculaire environ 1300, obtenue à partir de :

- 2 n moles d'acrylate de 2-hydroxy éthyle
- 2 n moles d'isophorone diisocyanate (IPDI)
- n moles de polyadipate d'éthylène glycol.

Le photo-initiateur utilisé est celui commercialisé par la Société CIBA sous la marque déposée "IRGACURE 651" (Irg. 651).

Dans l'exemple 2, le diluant réactif est un composé acrylique difonctionnel, le diacrylate d'hexanediol (HDDA).

Dans l'exemple 3, le diluant réactif est un acrylate monofonctionnel de formule précitée (EDGA).

Dans l'exemple 4, le diluant réactif est le N-isopropyl carbamoyloxyéthylacrylate de formule

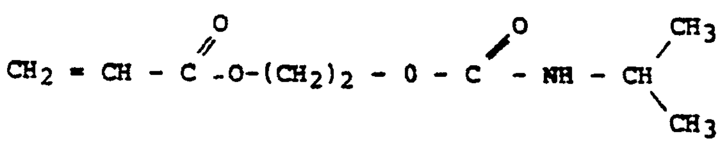 (Diluant n°1)

Dans l'exemple 5, le diluant réactif est, selon l'invention, l'acrylate de bêtahydroxyéthylcarbamate d'isopropyle (diluant n ° 2).

Dans l'exemple 6 le diluant réactif est, selon l'invention, un mélange d'acrylate de bêtahydroxyéthylcarbamate d'isopropyle (diluant n ° 2) et d'HDDA.

Dans l'exemple 7, le diluant réactif est un acrylate monofonctionnel, le phénoxy éthylacrylate (P.E.A.).

Après avoir mélangé la résine, le système diluant réactif et le photo-initiateur, on dépose un film de la

composition ainsi obtenue sur un support que l'on fait ensuite passer à différentes vitesses sous une lampe UV de puissance linéaire 80 W/cm , selon une direction perpendiculaire à la direction matérialisée par la longueur de la lampe.

La proportion des divers constituants des compositions, exprimée en parties pondérales, ainsi que la vitesse de passage sous la lampe UV nécessaire pour que le revêtement soit sec au doigt sont présentés dans le tableau 1 suivant :

| Exemple n° / Constituants | 2 | 3 | 4 | 5 | 6 | 7 |
|---|---|---|---|---|---|---|
| Act. 20 | 50 | 50 | 50 | 50 | 50 | 50 |
| HDDA | 50 | - | - | - | 25 | - |
| EDGA | - | 50 | - | - | - | - |
| PEA | - | - | - | - | - | 50 |
| Diluant n° 1 | - | - | 50 | - | - | - |
| Diluant n° 2 | - | - | - | 50 | 25 | - |
| Irg. 651 | 5 | 5 | 5 | 5 | 5 | 5 |
| | | | | | | |
| Vitesse en m/min | 10 | 1,25 | 3,3 | 10 | 10 | 5 |

**TABLEAU 1**

Le diluant réactif utilisé dans la présente invention (Diluant n ° 2) bien que monofonctionnel a une réactivité semblable à celle des monomères difonctionnels jusqu'alors utilisés.

L'inversion du motif carbamate par rapport au diluant réactif connu (diluant n ° 1) décrit dans EP 147172 entraîne de façon inattendue un gain très important en réactivité.

B/ Exemples 8 à 11 - Comparaison des propriétés mécaniques des revêtements obtenus.

On opère comme pour les exemples 2 à 7.

Le tableau 2 suivant précise la nature et la proportion pondérale des constituants des compositions utilisées ainsi que les résultats obtenus pour chaque essai.

Les mesures de propriétés mécaniques ont été effectuées à partir d'éprouvettes normalisées H3, en film de 150 µm séché et stabilisé 3 jours.

Le photo-initiateur utilisé est celui commercialisé par la Société MERCK sous la marque déposée "DAROCUR 1116".

TPGDA signifie tripropylèneglycoldiacrylate. C'est un diluant réactif connu et fréquemment utilisé.

| Exemple n° / Constituants | 8 | 9 | 10 | 11 |
|---|---|---|---|---|
| Act. 20 | 70 | 70 | 70 | 70 |
| EDGA | 30 | - | - | - |
| PEA | - | 30 | - | - |
| TPGDA | - | - | 30 | - |
| Diluant n° 2 | - | - | - | 30 |
| Darocur 1116 | 4 | 4 | 4 | 4 |
| | | | | |
| Contrainte à la rupture (en MPa) | 5 | 20 | 35 | 15 |
| Allongement à la rupture (en %) | 27 | 79 | 22 | 93 |

**TABLEAU 2**

Le diluant réactif (diluant n ° 2) utilisé dans le cadre de la présente invention permet d'obtenir des films ayant un allongement à la rupture plus élevé, ce qui se traduit concrètement par une plus grande souplesse.

C/ Exemples 12 à 19 - Comparaison de la viscosité des compositions

Le tableau 3 suivant précise la nature et la proportion pondérale des constituants des compositions étudiées ainsi que les résultats de viscosité obtenus (méthode du mobile tournant à 25° C).

| Exemple n° Constituants | 12 | 13 | 14 | 15 | 16 | 17 | 18 | 19 |
|---|---|---|---|---|---|---|---|---|
| Act. 20 | 80 | 80 | 80 | - | - | - | 50 | 50 |
| TPGDA | 20 | - | - | 100 | - | - | - | - |
| TMPTA | - | 20 | - | - | 100 | - | 50 | - |
| Diluant n°2 | - | - | 20 | - | - | 100 | - | 50 |
| | | | | | | | | |
| Viscosité (en mPa.s) | $10^5$ | $10^6$ | 130000 | 15 | 80 | 70 | 12000 | 5700 |

**TABLEAU 3**

Ces résultats mettent en évidence l'excellent et surprenant pouvoir diluant du diluant réactif n ° 2 selon l'invention. En effet, on constate, que de façon inattendue, on obtient d'une part un mélange avec la résine Act. 20 (exemple 14) ayant une viscosité du même ordre de grandeur (à peine supérieure) de celle du mélange de l'exemple 12, alors que la viscosité du diluant réactif n ° 2 est 5 fois supérieure à celle du TPGDA et d'autre part des mélanges avec la résine Act 20 (exemples 14 et 19) ayant une viscosité très nettement inférieure à celles des mélanges correspondants (exemples 13 et 18) avec le TMPTA alors que la viscosité du diluant réactif n ° 2 est du même ordre de grandeur que celle du TMPTA.

D/ Exemple 20 - Etude de la stabilité à la lumière d'une composition utilisée dans le procédé selon l'invention.

Un mélange 50/50 Act. 20/Diluant n ° 2 présente un indice de jaunissement inférieur à 1 après 500 heures de QUV Panel.

Exemples 21 à 32

Réalisation de revêtements avec des compositions contenant l'acrylate de bêtahydroxyéthyloxazolidone comme diluant réactif (diluant n ° 3). Comparaison avec des revêtements obtenus selon des procédés connus.

A/ Exemples 21 à 25 - Comparaison de la réactivité des compositions et de la dureté des revêtements.

Ces essais ont été réalisés comme pour les exemples 2 à 7.
Le tableau 4 suivant précise les données et résultats relatifs à chaque exemple.

| Exemple n° / Constituants | 21 | 22 | 23 | 24 | 25 |
|---|---|---|---|---|---|
| Act. 20 | 50 | 50 | 50 | 50 | 50 |
| HDDA | - | 50 | - | 25 | 25 |
| EDGA | 50 | - | - | 25 | - |
| Diluant n° 3 | - | - | 50 | - | 25 |
| Irg. 651 | 5 | 5 | 5 | 5 | 5 |
| | | | | | |
| Vitesse m/min | 1,25 | 10 | 10 | 10 | 20 |
| dureté Persoz | 40 | - | 80 | - | 200 |

**TABLEAU 4**

Le diluant réactif utilisé comme seul monomère dans la présente invention (Diluant n ° 3), bien que monofonctionnel, a une réactivité semblable à celle des monomères difonctionnels jusqu'alors utilisés.

On constate par ailleurs un effet synergique inattendu par mélange du diluant 3 et de l'HDDA, la réactivité étant dans ces conditions supérieure à celle obtenue avec chacun des 2 réactifs pris isolément.

En ce qui concerne la dureté, le remplacement de l'EDGA, réactif monofonctionnel habituellement utilisé par le diluant réactif n ° 3 monofonctionnel selon l'invention permet, à souplesse égale, de doubler la dureté.

B/ Exemples 26 à 29 - Comparaisons des propriétés mécaniques des revêtements obtenus.

On opère comme pour les exemples 8 à 11.

Le tableau 5 suivant précise les données et résultats relatifs à chaque exemple.

| Exemple n° / Constituants | 26 | 27 | 28 | 29 |
|---|---|---|---|---|
| Act. 20 | 70 | 70 | 70 | 70 |
| EDGA | 30 | - | - | - |
| PEA | - | 30 | - | - |
| TPGDA | - | - | 30 | - |
| Diluant n° 3 | - | - | - | 30 |
| Darocur 1116 | 4 | 4 | 4 | 4 |
| | | | | |
| Contrainte à la rupture (en MPa) | 5 | 20 | 35 | 28 |
| Allongement à la rupture (en %) | 27 | 79 | 22 | 82 |

**TABLEAU 5**

On constate que le diluant n ° 3 selon l'invention permet d'obtenir le meilleur compromis contrainte à la rupture/allongement à la rupture.

C/ Exemples 30 et 31 - Comparaison de la viscosité des compositions.

Le tableau 6 suivant précise la nature et la proportion pondérale des constituants des compositions étudiées ainsi que les résultats de viscosité obtenus (méthode du mobile tournant à 25° C), comparativement aux exemples 11, 12, 14 et 15 précités.

| Exemple n° Constituants | 30 | 31 | 12 | 13 | 15 | 16 |
|---|---|---|---|---|---|---|
| Act. 20 | 80 | - | 80 | 80 | - | - |
| TPGDA | - | - | 20 | - | 100 | - |
| TMPTA | - | - | - | 20 | - | 100 |
| Diluant n° 3 | 20 | 100 | - | - | - | - |
| | | | | | | |
| Viscosité (en mPa.s) | 135000 | 50 | 100000 | 1000000 | 15 | 80 |

**TABLEAU 6**

Ces résultats mettent en évidence l'excellent et surprenant pouvoir diluant du diluant réactif n ° 3 selon l'invention. En effet, on constate, que de façon inattendue, on obtient un mélange avec la résine Act. 20 (exemple 30) ayant d'une part une viscosité du même ordre de grandeur (à peine supérieure) de celle du mélange de l'exemple 12 alors que la viscosité du diluant réactif n ° 3 est plus de 3 fois supérieure à celle du TPGDA et d'autre part une viscosité 6 fois inférieure à celle du mélange correspondant (exemple 13) avec le TMPTA alors que la viscosité du diluant réactif n ° 3 n'est qu'à peine 2 fois inférieure à celle du TMPTA.

D/ Exemple 32 - Etude de la stabilité à la lumière d'une composition utilisée dans le procédé selon l'invention.

Un mélange 50/25 Act. 20/Diluant n ° 3 présente un indice de jaunissement inférieur à 2 après 500 h de QUV Panel.

Exemples 33 et 34

Réalisation d'un revêtement avec une composition contenant le méthacrylate de bêtahydroxyéthylcarbamate d'isopropyle (diluant n ° 4) comme diluant réactif. Comparaison de la réactivité avec une composition contenant le N-isopropyl carbamoyloxyéthylméthacrylate (diluant n ° 5).

Ces essais ont été réalisés comme pour les exemples 2 à 7.

Le tableau 7 suivant précise les données et résultats relatifs à chaque exemple.

| Exemple n° / Constituants | 33 | 34 |
|---|---|---|
| Act. 20 | 50 | 50 |
| Diluant n° 4 | 50 | - |
| Diluant n° 5 | - | 50 |
| Irg. 651 | 5 | 5 |
| | | |
| Vitesse m/min | 3,0 | 2,2 |

TABLEAU 7

L'inversion du motif carbamate par rapport au diluant réactif n ° 5 connu entraîne un gain en réactivité.

## Revendications

1. Procédé de fabrication de revêtements par radioréticulation de compositions contenant une résine durcissable par polymérisation de doubles liaisons

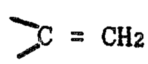

et un système diluant réactif caractérisé en ce que ledit système contient au moins un diluant réactif répondant à la formule générale (I)

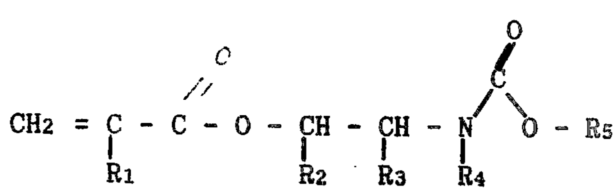

dans laquelle

- . $R_1$ représente un atome d'hydrogène ou un groupement méthyle
- . $R_2$ et $R_3$ représentent un atome d'hydrogène, ou une chaîne alkyle comportant de 1 à 4 atomes de carbone.
- . $R_4$ représente un atome d'hydrogène, ou une chaîne alkyle comportant de 1 à 4 atomes de carbone.
- . $R_5$ représente une chaîne aliphatique éventuellement substituée comportant de 1 à 10 atomes de carbone.
- . ou bien encore $R_4$ et $R_5$ forment, avec le groupement carbamate auquel ils sont attachés, un cycle à 5 ou 6 chaînons.

**2.** Procédé selon la revendication 1 caractérisé en ce que $R_2$ et $R_3$ représentent un atome d'hydrogène.

**3.** Procédé selon l'une quelconque des revendications précédentes caractérisé en ce que $R_4$ représente un atome d'hydrogène.

**4.** Procédé selon l'une quelconque des revendications précédentes caractérisé en ce que $R_5$ forme avec $R_4$ et le groupement carbamate un cycle oxazolidone.

**5.** Procédé selon l'une quelconque des revendications 1 et 2 caractérisé en ce que le diluant réactif répondant à la formule générale (I) est choisi dans le groupe constitué par l'acrylate de bêtahydroxyéthyloxazolidone et l'acrylate de bêtahydroxyéthylcarbamate d'isopropyle.

**6.** Procédé selon l'une quelconque des revendications précédentes caractérisé en ce que le système diluant réactif contient au moins un autre diluant réactif que celui répondant à la formule générale (I).

**7.** Procédé selon l'une quelconque des revendications précédentes caractérisé en ce que le système diluant réactif contient un mélange de diluants réactifs de formule générale (I).

**8.** Procédé selon l'une quelconque des revendications précédentes caractérisé en ce que la composition comprend entre 30 et 80% en poids de résine durcissable et 70 à 20% en poids de système diluant réactif.

**9.** Procédé selon la revendication 1 caractérisé en ce que la résine durcissable est choisi dans le groupe constitué par les résines polyester-acryliques, les résines époxy-acryliques, les résines polycarbonate-acryliques, les résines polyéther-acryliques et les résines uréthanne insaturées.

**10.** Procédé selon l'une quelconque des revendications 1 à 9 caractérisé en ce que la résine durcissable est linéaire et de masse moléculaire comprise entre 600 et 10 000.

**11.** Procédé selon l'une quelconque des revendications précédentes caractérisé en ce que la radioréticulation est réalisée par rayonnement UV, en présence d'un photo-initiateur.

**12.** L'acrylate de bêtahydroxyéthylcarbamate d'isopropyle.

## Claims

**1.** Process for the production of coatings by radiation crosslinking of compositions containing a resin which can be cured by the polymerization of the double bonds

$$>C = CH_2$$

and a reactive diluent system which is characterized in that the said system contains at least one reactive diluent corresponding to the general formula (I)

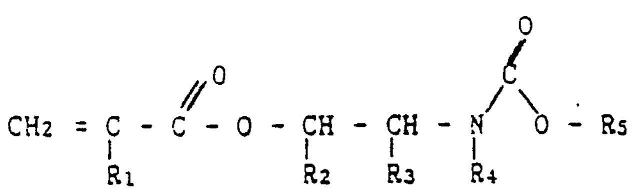

in which

$R_1$ represents a hydrogen atom or a methyl group,

$R_2$ and $R_3$ represent a hydrogen atom, or an alkyl chain containing 1 to 4 carbon atoms.

$R_4$ represents a hydrogen atom, or an alkyl chain containing 1 to 4 carbon atoms.

$R_5$ represents an optionally substituted aliphatic chain containing 1 to 10 carbon atoms.
or alternatively, $R_4$ and $R_5$ form, with the carbamate group to which they are attached, a 5- or 6-membered ring.

2. Process according to claim 1, characterized in that $R_2$ and $R_3$ represent a hydrogen atom.

3. Process according to any one of the preceding claims, characterized in that $R_4$ represents a hydrogen atom.

4. Process according to any one of the preceding claims, characterized in that $R_5$ forms, with $R_4$ and the carbamate group, an oxazolidone ring.

5. Process according to either of claims 1 and 2, characterized in that the reactive diluent corresponding to the general formula (I) is chosen from the group consisting of the acrylate of beta-hydroxyethyloxazolidone and the acrylate of isopropyl beta-hydroxyethylcarbamate.

6. Process according to any one of the preceding claims, characterized in that the reactive diluent system contains at least one reactive diluent other than that corresponding to the general formula (I).

7. Process according to any one of the preceding claims, characterized in that the reactive diluent system contains a mixture of reactive diluents of general formula (I).

8. Process according to any one of the preceding claims, characterized in that the composition contains between 30 and 80% by weight of resin which can be cured and between 70 and 20% by weight of reactive diluent system.

9. Process according to claim 1, characterized in that the resin which can be cured is chosen from the group consisting of polyester/acrylic resins, epoxy/acrylic resins, polycarbonate/acrylic resins, polyether/acrylic resins and unsaturated urethane resins.

10. Process according to any one of claims 1 to 9, characterized in that the resin which can be cured is linear and is of molecular weight between 600 and 10,000.

11. Process according to any one of the preceding claims, characterized in that the radiation crosslinking is carried out by UV radiation, in the presence of a photo-initiator.

12. The acrylate of isopropyl beta-hydroxyethylcarbamate.

## Ansprüche

1. Verfahren zur Herstellung von Beschichtungen durch Strahlungsvernetzung von Zusammensetzungen, die ein durch Polymerisation von Doppelbindungen

$$>C=CH_2$$

härtbares Harz sowie ein reaktives Verdünnungssystem enthalten,

**dadurch gekennzeichnet,** daß

das reaktive Verdünnungssystem mindestens ein reaktives Verdünnungsmittel der allgemeinen Formel I enthält,

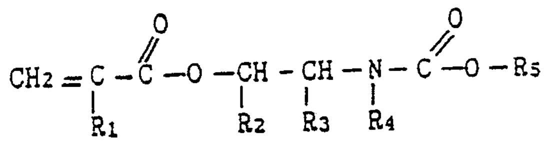 (I),

in der bedeuten:

- $R_1$ Wasserstoff oder Methyl,
- $R_2$ und $R_3$ Wasserstoff oder $C_{1-4}$-Alkyl,
- $R_4$ Wasserstoff oder $C_{1-4}$-Alkyl
  und
- $R_5$ eine ggfs. substituierte aliphatische Gruppe mit 1 bis 10 C-Atomen
  oder
- $R_4$ und $R_5$ zusammen mit der Carbamatgruppe, an der sie gebunden sind, einen 5- oder 6-gliedrigen Ring.

**2.** Verfahren nach Anspruch 1, dadurch gekennzeichnet, daß $R_2$ und $R_3$ Wasserstoff bedeuten.

**3.** Verfahren nach Anspruch 1 oder 2, dadurch gekennzeichnet, daß $R_4$ Wasserstoff bedeutet.

**4.** Verfahren nach einem der Ansprüche 1 bis 3, dadurch gekennzeichnet, daß $R_5$ zusammen mit $R_4$ und der Carbamatgruppe einen Oxazolidonring bildet.

**5.** Verfahren nach Anspruch 1 oder 2, dadurch gekennzeichnet, daß das reaktive Verdünnungsmittel der allgemeinen Formel I unter ß-Hydroxyethyloxazolidonacrylat und ß-Hydroxyethylisopropylcarbamat-acrylat ausgewählt ist.

**6.** Verfahren nach einem der Ansprüche 1 bis 5, dadurch gekennzeichnet, daß das reaktive Verdünnungssystem neben dem reaktiven Verdünnungsmittel der allgemeinen Formel I mindestens ein weiteres reaktives Verdünnungsmittel enthält.

**7.** Verfahren nach einem der Ansprüche 1 bis 6, dadurch gekennzeichnet, daß das reaktive Verdünnungssystem ein Gemisch von reaktiven Verdünnungsmitteln der allgemeinen Formel I enthält.

**8.** Verfahren nach einem der Ansprüche 1 bis 7, dadurch gekennzeichnet, daß die Zusammensetzung 30 bis 80 Gew.-% härtbares Harz und 70 bis 20 Gew.-% reaktives Verdünnungssystem enthält.

**9.** Verfahren nach Anspruch 1, dadurch gekennzeichnet, daß das härtbare Harz unter Polyesteracrylharzen, Epoxyacrylharzen, Polycarbonatacrylharzen, Polyetheracrylharzen und ungesättigten Urethanharzen ausgewählt ist.

**10.** Verfahren nach einem der Ansprüche 1 bis 9, dadurch gekennzeichnet, daß das härtbare Harz ein lineares Harz ist und eine Molekülmasse von 600 bis 10 000 aufweist.

**11.** Verfahren nach einem der Ansprüche 1 bis 10, dadurch gekennzeichnet, daß die Strahlungsvernetzung durch UV-Bestrahlung in Gegenwart eines Photoinitiators durchgeführt wird.

**12.** ß-Hydroxyethylisopropylcarbamat-acrylat.